## Europäisches Patentamt
## European Patent Office
## Office européen des brevets

(19)

(11) Veröffentlichungsnummer: **0 086 732**
**B1**

(12) # EUROPÄISCHE PATENTSCHRIFT

(45) Veröffentlichungstag der Patentschrift:
23.07.86

(51) Int. Cl.⁴: **C 21 C 5/32**

(21) Anmeldenummer: **83630022.8**

(22) Anmeldetag: **15.02.83**

(54) Verfahren zum Erhöhen der Kühlstoffsätze beim Herstellen von Stahl durch Sauerstoffaufblasen.

(30) Priorität: **17.02.82 LU 83954**

(43) Veröffentlichungstag der Anmeldung:
**24.08.83 Patentblatt 83/34**

(45) Bekanntmachung des Hinweises auf die Patenterteilung:
**23.07.86 Patentblatt 86/30**

(84) Benannte Vertragsstaaten:
**AT BE DE FR GB IT NL SE**

(56) Entgegenhaltungen:
EP-A-0 018 935
EP-A-0 028 998
DE-A-1 583 240
FR-A-1 294 594

**IRON AND STEEL ENGINEER, Band 58, Nr. 12, Dezember 1981, Seiten 34-38, Pittsburgh, USA, F. SCHLEIMER et al.: "Development of the LBE process"**

(73) Patentinhaber: **ARBED S.A., Avenue de la Liberté 19, L-2930 Luxembourg (LU)**

(72) Erfinder: **Schleimer, François, 3 rue Bessemer, L-4032 Esch/Alzette (LU)**
Erfinder: **Henrion, Romain, 127 rue Jean- Pierre Michels, L-4243 Esch/Alzette (LU)**
Erfinder: **Goedert, Ferdinand, 10 rue Bessemer, L-4032 Esch/Alzette (LU)**
Erfinder: **Thill, Fernand, 40 rue Mathias Koener, L-4174 Esch/Alzette (LU)**

(74) Vertreter: **Neyen, René, Administration Centrale de l'Arbed Case postale 1802, L-2930 Luxembourg (LU)**

## Beschreibung

Die Erfindung betrifft ein Verfahren zum Erhöhen der Einsätze an Kühlstoffen, wie Stahlschrott, Eisenerz, Eisenschwamm, vorreduzierte Erzpellets u. dgl.,welches sich im Rahmen eines Frischverfahrens ausgehend von Roheisen abspielt, bei welchem der Sauerstoff durch Aufblasen geliefert wird.

Der Anmelder hat in seinen luxemburgischen Patenten LU 81.207 und LU 81.859 ein Verfahren zum Frischen von Roheisen beschrieben, das vorsieht, beim Frischen durch Sauerstoffaufblasen die physikalischen Eigenschaften der Schlacken, sowie die Kinetik der Entkohlungsreaktionen im Konverter durch ein gezieltes Einführen von Inertgasen durch den Gefässboden zu beeinflussen. Die Behandlung der Metallschmelze und der Schlacken mit Inertgasen ruft folgendes hervor: Erstens kann hierdurch verhindert werden, dass die Schlacken eine schäumige Konsistenz annehmen, wodurch man die Ausbildung einer voluminösen, thermisch isolierenden Schicht über dem Metallbad vermeidet und zweitens lässt sich, wie aus dem Artikel "Development of the LBE-Process" Iron and Steel Engineer, Bd.58/12-1981 hervorgeht, die Schlackenmenge selbst verringern und zwar durch einen niedrigeren Kalkverbrauch bei der Entphosphorung. Ferner wird die Kinetik der Oxydation des Badkohlenstoffs durch die gezielte Inertgaseinführung regulierbar.

Die auf diese Weise herbeigeführte Situation sieht wie folgt aus: Auf der Metalloberfläche schwimmt eine schaumfreie Schlackenschicht. Die mit Hilfe einer Zweikreislanze bewirkte, gegenüber herkömmlichen Verfahren stark erhöhte Nachverbrennung des beim Entkohlen des Bades gebildeten CO-Gases findet unmittelbar an der Badoberfläche statt, wobei ein hoher Anteil der durch die Nachverbrennung freigesetzten Energie, an das Bad selbst abgegeben wird, da eine schaumfreie Schlackenschicht den Wärmeübergang weniger hemmt als eine schäumige.

Eben diesem, gegenüber konventionellen Aufblasverfahrn erhöhten Anteil an Energie ist es zu verdanken, dass das Verfahren Schrottsätze in der Grössenordnung von 450 kg/Tonne Stahl gestattet.

Das Ziel der Erfindung bestand darin, ein Verfahren vorzuschlagen, das eine weitere Erhöhung der Kühlstoffsätze erlaubt.

Dieses Ziel wird erreicht durch das erfindungsgemässe Verfahren, gemäss Anspruch 1. Die Schlackenmenge im Verlauf des Frischprozesses generell auf ein absolutes Minimum beschränkt, indem man schlackenbilden Kalk nur graduell und zwar in Abhängigkeit von der Bildung zu verschlackender Stoffe zusetzt. Die Entkohlungsperiode wird über die normalerweise üblichen Zeitabstände hinaus streckt. Dies wird dank der erfindungsgemäss auf ein absolutes Minimum beschränkten Schlackenmenge ohne Risiken, wie Siedeverzügen mit anschliessendem Auswurf möglich und führt zu einer wesentlichen Steigerung des Wirkungsgrades der Nachverhrennung des sich bildenden Kohlenmonoxyds in unmittelbarer Nähe des Metallbades. Gleichzeitig wird der Übergang der durch die Nachverbrennung erzeugten Wärme an das nahezu schlackenfreie Metallbad erhöht.

Die gestreckte Entkohlungsperiode ermöglicht ferner eine Optimierung der thermischen Ausbeute bei der Zugabe von beliebigen Fremdenergieträgern von oben in den Konverter, wobei diese Zugabe vorzugsweise durch eine hierzu geeignete Sauerstoff/Feststoff-Blaslanze erfolgt.

Ist der Fremdenergieträger ein fester Kohlenstoffträger, so erfolgt die Zugabe erfindungsgemäss zu einem geeigneten Zeitpunkt der dann gegeben ist, wenn die Schmelze einen Kohlenstoffgehalt unterhalb von 2% aufweist.

Der Ablauf der erfindungsgemässen Verfahrensschritte kann wie folgt skizziert werden:

In den Konverter werden Stahlroheisen, sowie Kühlstoff, eingetragen. Eine erste Frischphase wird vorgenommen, in deren Verlauf Sauerstoff aufgeblasen und die Schmelze mit Inertgas gespült wird. Die Elemente Silizium und Mangan werden oxydiert bevor die Entkohlung in vollem Umfang einsetzt und die Oxyde $SiO_2$ und $MnO$ bilden eine nichtreaktive Schlacke. Diese Phase gilt als abgeschlossen, wenn die CO-Bildung eingesetzt hat, was mittels einer kontinuierlichen Schallpegelmessung und/oder einer ebenfalls kontinuierlichen Abgasanalyse feststellbar ist.

Es folgt eine zweite, zweiteilige Frischphase: Eine bewusst gesteuerte Entkohlungsperiode, in deren Verlauf eine Zugabe von Fremdenergieträgern erfolgen kann, sowie eine Entphosphorungs/Entschwefelungsperiode, unter Zugabe von Kalk.

Die Entkohlungsperiode zeichnet sich dadurch aus, dass man die üblicherweise um 600 mit Spitzen bis zu 800 kg C/Minute liegende Entkohlungsgeschwindigkeit auf Werte unterhalb 400 kg C/Minute (verallgemeinert: 4 bzw. 8 bzw. 3 kg C/Minute.Tonne Stahl) herahsetzt. Hierzu erniedrigt man das Primärsauerstoff-Angebot, während man das Sekundärsauerstoff-Angebot zwecks Begünstigung der Nachverbrennung erhöht.

Der Wirkungsgrad der Nachverbrennung, der sich gemäss dem eingangs erwähnten Stand der Technik zwischen 15 und 27% bewegt, steigt dank der erfindungsgemässen Verfahrensschritte auf Werte um 40%.

Nach der sich anschliessenden Entphosphorungs/Entschwefelungsperiode, für deren Durchführung die Zugabe von Kalk erforderlich ist, wird, wie beim konventionellen LD-Verfahren, der Stahl abgestochen und die Restschlacke aus dem Konverter entfernt und nicht mehr metallurgisch wiederverwendet. Es sollen jedoch auch bei der Verwendung von Stahlroheisen die einzelnen Verfahrensschritte denjenigen entsprechen, die beim Frischen von phosphorreichem Roheisen erforderlich sind. Und zwar soll zum Optimieren der Stahlqualität und zum sinnvollen Einsatz des Schlackenbildners ein Zwei-Phasen-Verfahren mit Zwischenabschlackung durchgeführt werden, dessen einzelne Schritte chronologisch wie folgt ablaufen:

- die Si, Mn-Oxydationsperiode;
- die gestreckte Entkohlungsperiode ggf. unter Zugabe von Fremdenergieträgern;
- eine Grob-Entphosphorungs/Entschwefelungsperiode mit Zugabe der in der vorherigen Charge gebildeten,

2

flüssigen und hochbasischen Schlacke;
- ein Abschlacken, wobei die Schlacke nicht mehr metallurgisch wiederverwendet wird;
- eine Fein-Entphosphorungs/Entschwefelungsperiode unter Bildung einer hochbasischen Schlacke;
- der Stahlabstich;
- eine Ueberführung der hochbasischen Restschlacke in eine Pfanne zwecks Wiederverwendung im Rahmen der Grob-Entphosphorungs/Entschwefelungsperiode der nächsten Charge.

Die durch das erfindungsgemässe Verfahren erzielbaren Verbesserungen hinsichtlich des Nachverbrennungs-Wirkungsgrades und damit auch der Kapszität an Kühlstoffsätzen, gehen sus dem nachfolgenden praktischen Durchführungsbeispielen hervor; diese beziehen sich auf:

(A) phosphorreiches Roheisen ; (B) Stahlroheisen

| | (A) | (B) |
|---|---|---|
| % C : | 4,2 | 4.3 |
| % Mn : | 0.25 | 0.7 |
| % P : | 1,6 | 0.1 |
| % S : | 0,025 | 0.025 |
| % Si : | 0,5 | 0.7 |
| Temperatur : | 1340°C | 1360°C |

| | | Konventionelle Verfahrensweise | Verfahrensweisen nach der Erfindung | |
|---|---|---|---|---|
| (A) | x | 0.15 | 0.40 | 0.40 |
| | R | 700 | 633 | 600 |
| | K | 400 | 464 | 500 |
| | Ca | 80 | 72 | 69 |
| | O | 57 | 59 | 64 |
| | C | 0 | 0 | 5.7 |
| | dC | 6 | 8 | 10 |
| (B) | x | 0.15 | 0.40 | 0.40 |
| | R | 777 | 693 | 600 |
| | K | 323 | 407 | 500 |
| | Ca | 64 | 57 | 49 |
| | O | 55 | 58 | 69 |
| | C | 0 | 0 | 14.8 |
| | dC | 6 | 8 | 14 |

## Patentansprüche

1. Verfahren zum Erhöhen der Kühlstoffsätze beim Frischen von Roheisen durch Sauerstoffaufblasen und gleichzeitiges Einleiten von Inertgas durch den Gefässboden, bei dem man schlackenbildenden Kalk nur in Abhängigkeit von der Bildung zu verschlackender Stoffe zusetzt, und zwar indem man in einer ersten Phase Roheisen sowie Kühlstoff in einen Konverter einträgt und die als erste verbrennenden Elemente Silizium und Mangan durch Sauerstoffaufblasen oxydiert, bis die Oxydation des Kohlenstoffs eingesetzt hat, in einer zweiten Phase eine Entkohlung vornimmt, während welcher man zum Erhöhen der thermischen Ausbeuten Fremdenergieträger von oben in den Konverter einführt und bei der die Entkohlungsgeschwindigkeit unterhalb 3 kg C/ Minute.Tonne Stahl liegt und dann eine Entphosphorungs/ Entschwefelungsreaktion anschliesst, während welcher man Kalk zugibt.

2. Verfahren nach dem Anspruch 1, dadurch gekennzeichnet, dass man im Fall von festen Kohlenstoffträgern die Zugabe zu einem Zeitpunkt vornimmt, wenn der Kohlenstoffgehalt der Schmelze unter 2 % liegt.

3. Verfahren nach dem Anspruch 1, dadurch gekennzeichnet, dass man nach der Entphosphorungs/Entschwefelungsperiode den Stahl absticht und die Schlacken entfernt und nicht mehr metallurgisch weiterverwendet.

4. Verfahren zum Erhöhen der Kühlstoffsätze beim Frischen von Roheisen durch Sauerstoffaufblasen und gleichzeitiges Einleiten von Inertgas durch den Gefässboden, welches insbesondere eine Verringerung der Schlackenmenge durch gezielte Kalkzugabe im Verlauf einer gesonderten Entphosphorungs/Entschwefelungsperiode ermöglicht, bei dem man zum Optimieren der Stahlqualität und zum sinnvollen Einsatz des Schlackenbildners eine Zwischenabschlackung vorsieht und den Frischprozess chronologisch wie folgt gestaltet: die Si, Mn-Oxydationsperiode;

die gestreckte Entkohlungsperiode ggf. unter Zugabe von Fremdenergieträgern;

eine Grob-Entphosphorungs/Entschwefelungsperiode mit Zugabe der in der vorherigen Charge gebildeten, flüssigen und hochbasischen Schlacke;

ein Abschlacken, wobei die Schlacke nicht mehr metallurgisch wiederverwendet wird;

eine Fein-Entphosphorungs/Entschwefelungsperiode unter Bildung einer hochbasischen Schlacke; der Stahlabstich;

eine Ueberführung der hochbasischen Restschlacke in eine Pfanne zwecks Wiederverwendung im Rahmen der Grob-Entphosphorungs/Entschwefelungsperiode der nächsten Charge.

## Claims

1. A process for increasing the batches of coolants during the refining of hot metal through top-blowing oxygen and concurrently injecting gas through the vessel bottom, which comprises adding slag-forming lime only at the rate of availability of matter to be converted to slag, in that one adds within a first phase hot metal and cooling matter in the converter and that one oxydizes the elements silicon and manganese which are prone to burn first, by blowing oxygen until the carbon begins to be oxydized, that one effects a decarburization within a second phase during which one adds external energy bearing material from the top, in order to increase the thermal yields, where the rate of decarburization is below 3 kg C/minute x ton of steel and that one thereafter effects a dephosphorization/desulphurization reaction during which one adds lime.

2. A process according to claim 1, characterized in that one effects the addition of solid carbon bearing material at a time when the carbon content of the melt is below 2 %.

3. A process according to claim 1, characterized in that one taps the steel after the dephosphorization/desulphurization period snd that one removes the slag without making metallurgical use of such thereafter.

4. A process for increasing the batches of coolants during the refining of hot metal through top-blowing oxygen and concurrently injecting inert gas through the vessel bottom, which mainly allows to reduce the slag amount through a calculated addition of lime during a separate dephosphorization/desulphurization period, which comprises an intermediate deslagging in view of optimizing steel quality and making better use of the slag-forming material, and a chronological sequence of the refining process steps as follows:

. the Si, Mn-oxydization period;

. the extended decarburization period, that may comprise an addition of external energy bearing material;

. a crude dephosphorization/desulphurization period under addition of the liquid, highly basic slag that was formed during the previous heat;

. a deslagging, where the slag is not metallurgically reused;

. a precise dephosphorization/desulphurization period, where there is formed a highly basic slag;

. the steel teeming;

. a transfer of the highly basic residual slag into a ladle in view of a reuse within the crude dephosphorization/ desulphurization period of the oncoming heat.

## Revendications

1. Procédé pour augmenter la quantité d'agent de refroidissement au cours de l'affinage de la fonte par soufflage d'oxygène par le haut et par injection simultanée de gaz inerte par le fond du convertisseur, dans lequel procédé on ajoute de la chaux scorifiante seulement au rythme de la formation de matières à scorifier, en introduisant dans une première phase de la fonte et des matières refroidissantes dans le convertisseur et que l'on oxyde les éléments silicium et manganèse qui s'oxydent en premier, à l'aide d'un soufflage d'oxygène par le haut, jusqu'à ce que débute l'oxydation du carbone, que l'on opère dans ume deuxième phase une décarburation au cours de laquelle on introduit par le haut dans le convertisseur un porteur externe d'énergie en vue d'augmenter le rendement thermique et où la vitesse de décarburation se situe en-desous de 3 kg C/minute x tonne d'acier et que l'on fait suivre une réaction de déphosphoration/désulfuration au cours de laquelle on ajoute de la chaux.

2. Procédé suivant la revendication 1, caractérisé en ce que l'on opère l'ajoute, dans le cas d'un porteur de carbone solide, à un moment où la teneur en carbone du bain est en-dessous de 2 %.

3. Procédé suivant la revendication 1, caractérisé en ce que l'on coule l'acier au terme de la période de déphosphoration/désulfuration et que l'on enlève les laitiers, sans les réutiliser de manière métallurgique.

4. Procédé pour augmenter la quantité d'agent de refroidissement au cours de l'affinage de la fonte par soufflage d'oxygène par le haut et par injection simultanée de gaz inerte par le fond du convertisseur, qui permet avant tout de réduire la quantité de la scorie, par une ajoute calculée de chaux au cours d'une période séparée de déphosphoration/désulfuration, dans lequel procédé on prévoit un décrassage intermédiaire en vue d'optimiser la qualité de l'acier et de mieux exploiter la matière scorifiante et où l'on conduit l'affinage de manière chronologique comme suit:

. la période d'oxydation du Si et du Mn;

. la période étendue de décarburation, le cas échéant avec ajoute de porteurs externes d'énergie;

. une période de déphosphoration/désulfuration crûe avec ajoute de laitier liquide et hautement basique formé au cours de la charge précédente;

. un décrassage, sans réutilisation métallurgique du laitier;

. une période de déphosphoration/désulfuration fine, avec formation d'un laitier hautement basique;

. la coulée de l'acier;

. un transfert du laitier résiduel hautement basique dans une poche, en vue d'une réutilisation dans le cadre de la période de déphosphoration/désulfuration crûe de la charge succédante.